# EUROPEAN PATENT APPLICATION

(11) **EP 3 336 852 A1**
(43) Date of publication of application: **20.06.2018**
(21) Application number: 15901039.6
(22) Date of filing: 13.08.2015
(51) Int. Cl.: G21C 11/08

(54) **NUCLEAR REACTOR INSULATOR HAVING MOLTEN CORE COLLECTING FUNCTION**

(30) Priority: 11.08.2015 KR 20150113300
(71) Applicant: Korea Hydro & Nuclear Power Co., Ltd, Gyeongju-si, Gyeongsangbuk-do 38146 (KR)
(72) Inventor: KIM, Yong Soo, Daejeon 34023 (KR); HWANG, Do Hyun, Daejeon 34008 (KR); LEE, Keun Sung, Daejeon 34016 (KR); KIM, Ji Hwan, Daejeon 34061 (KR)
(74) Representative: Rösler Rasch van der Heide & Partner
(86) International application number: PCT/KR2015/008525
(87) International publication number: WO 2017/026557

(57) **Abstract**

The present invention relates to an apparatus for protecting a containment building from a molten core generated from a nuclear reactor and, more specifically, to an insulator provided outside a reactor pressure vessel. A nuclear reactor insulator can comprise: an insulating body which is positioned at a predetermined distance away from the lateral side of a reactor pressure vessel and encircles the lateral side of the reactor pressure vessel, and of which the lower part is tapered; and a soluble plug which is provided on the bottom side of the insulating body and is for storing a molten core generated from the reactor pressure vessel, wherein the molten core discharged from the lateral side of the reactor pressure vessel can be guided and discharged downward. The present invention can prevent thermal damage to a containment building due to damage in the lateral side of the reactor pressure vessel, and enables installation of a core catcher of which the cross-sectional area has been reduced by means of guiding the molten core downward and increasing the predictability of the storage thereof. Moreover, the present invention enables reduction of a heat load in the core catcher by means of retarding the time of the molten core reaching to the core catcher and reduces the risk of a steam explosion of the containment building, due to multiple discharges, by means of reducing the number of molten core discharges from the reactor pressure vessel to a reactor cavity.

## Description

### Technical Field

The present invention relates to an apparatus for protecting a containment building from a molten core generated from a nuclear reactor in case of accident, and more specifically, to an insulator provided outside a reactor pressure vessel.

### Background Art

The loss of a coolant inside of a reactor pressure vessel and the failure of a power supply may cause a damage of a reactor core such as a molten core by the heat.

When the reactor core of the reactor pressure vessel installed in the containment building is molten, the molten core is released from the opening part of the nuclear reactor through the broken nuclear reactor pressure vessel. The molten core may include an enriched uranium and zirconium.

The molten core is a high temperature molten material mixed with a number of substances in the reactor pressure vessel. It produces a huge amount of heats by the decay of fission products. The level of heats generated by the decay may decrease gradually according to the time elapsed after stopping the operation of the nuclear reactor. However, when the molten core is produced, the heat after 1 hour from stopping the operation of the nuclear reactor is significantly high level such as 1% of the nominal output of the nuclear reactor. Accordingly, without treating the molten core properly, radioactive materials are leaking out and then there is a risk of serious pollution to the environment.

In the connection with the present invention, KR Pat. No. 10-0549862 (Prior art 1: An apparatus and method for cooling a molten core passing through a reactor vessel) discloses an apparatus and method for holding the molten core in the cavity of the nuclear reactor.

Furthermore, KR Pat. No. 10-0265320 (Prior art 2: An apparatus for suppressing a molten core in of a nuclear reactor) discloses an apparatus for suppressing a molten core by utilizing the inclined coolant reservoir which is installed at the bottom of a reactor vessel.

In the Prior arts 1 and 2, the cooling technology is disclosed under the assumption that the molten core is housed within a certain range. However, there are limits to which uncertainties are not taken into account, because the molten core may be discharged outside a specific range due to an explosion of the reactor pressure vessel.

Therefore, the prior arts discussed above have limitations: a core catcher having a wider cross sectional area compared to the vertical projection area of the nuclear reactor pressure vessel, should be installed for accepting the molten core. Also, when the lateral side of the reactor pressure vessel is damaged, the structure, system and components (SSCs) in the containment building could be damaged by the molten core discharged laterally from the reactor pressure vessel.

### [Citation List]

### [Patent Literature]

(Patent Document 1) Korean Patent No. 10-0549862

### Disclosure

### Technical Problem

Accordingly, the present invention has been made to solve the above problems, and the object of the present invention is to increase the predictability of the housing range for accepting the molten core discharged from the reactor pressure vessel, in particular, to maintain the integrity of structure, system and components (SSCs) in the containment building from the molten core discharged laterally from the reactor pressure vessel.

### Technical Solution

In order to achieve the above object, a nuclear reactor insulator according to the present invention comprises an insulating body which is positioned at a predetermined distance away from the lateral side of a reactor pressure vessel and encircles the lateral side of the reactor pressure vessel, and of which the lower part is tapered. The insulating body is capable of guiding and discharging the molten core downward, wherein the molten core is discharged from the reactor pressure vessel.

Preferably, the insulating body is made of Zirconium oxide (ZrO₂) or Magnesium oxide (MgO), which has low reactivity with the molten core.

Preferably, the soluble plug may be installed at the bottom of the insulating body, and form a base in which the guided and discharged molten core is received temporarily.

Preferably, the soluble plug may be composed of sacrificial materials which have high reactivity with the molten core for erosion by overload of the guided and discharged molten core.

### Advantageous Effects

The present invention can provide an insulating body encircling the lateral side of the nuclear reactor pressure vessel, which can collect the molten core discharged laterally from the reactor pressure vessel, thereby the present invention has an advantage for protecting structure, system and components (SSCs) in the containment building from the damage by the molten core.

Another advantage of the present invention is to provide a core catcher having a minimum cross sectional area, since the lower part of the insulating body is tapered and the molten core collected laterally is guided downward.

Moreover, the present invention enables reduction of a heat load in the core catcher by means of delaying the time of the molten core reaching to the core catcher, since the molten core guided downward is stored temporarily by a soluble plug before being discharged.

### Description of Drawings

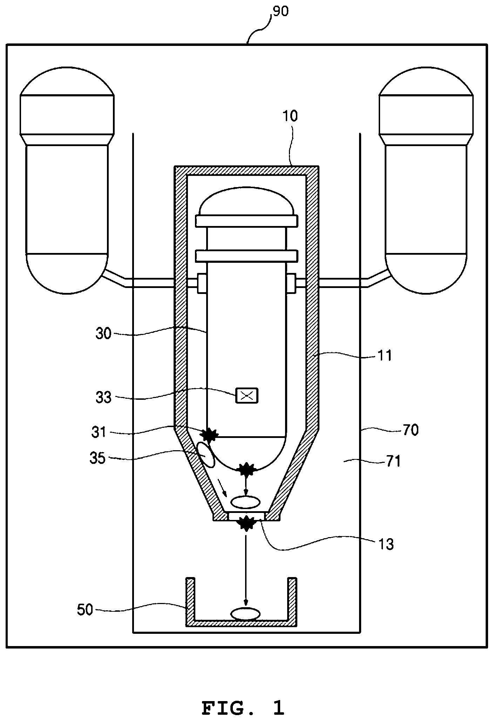

FIG. 1 is a view illustrating a configuration of a nuclear reactor insulator being installed between a reactor pressure vessel and the lateral concrete wall according to an embodiment of the present invention.

### Best Mode

Hereinafter, embodiments of the present invention will be described in detail with reference to the accompanying drawings so that those skilled in the art can easily operate the present invention. However, the present invention may be embodied in many different forms and should not be construed as limited to the embodiments set forth herein. In order to clearly illustrate the present invention, parts not being related to the description are omitted, and similar parts are denoted by same reference numerals throughout the specification.

The purpose and effect of the present invention can be understood naturally or made clearer by the description below. However, the description does not limit the purpose and effectiveness of the present invention. Furthermore, in explaining the present invention, if it is considered that the explanation of the prior arts related to the present invention can make the invention vague, the detailed explanation of the invention is omitted.

FIG. 1 is a view illustrating a configuration of a nuclear reactor insulator being installed between a reactor pressure vessel and the lateral concrete wall according to an embodiment of the present invention. By referring FIG. 1, a nuclear reactor insulator 10 having the function of collecting the molten core composes an insulating body 11, and a soluble plug 13.

The insulating body 11 is positioned at a predetermined distance away from the lateral side of a reactor pressure vessel 30 and encircles the lateral side of the reactor pressure vessel 30. The lower part or lateral side of the nuclear reactor pressure vessel 30 can be melted by means of the accumulated high-temperature molten core 35 which contacts directly with the lower part or lateral side of the reactor pressure vessel 30.

Once the molten core 35 having high temperature is accumulated in the reactor pressure vessel 30, the molten core 35 can be discharged toward outside of the reactor pressure vessel 30. In case of severe accident that core in the reactor pressure vessel melts, the accumulated amount of the molten core 35 is increased from upper to lower part of the reactor pressure vessel 30, thereby the thermal capacity is increased and the possibility of explosions is also increased.

The insulating body 11 is positioned at a predetermined distance away from the lateral side of a reactor pressure vessel 30 in consideration of the thermal expansion of the reactor pressure vessel 30 by means of the molten core 35. Accordingly, the stability of the reactor structure can be maintained because the predetermined distance can accommodate the expanded volume of the reactor pressure vessel 30 by means of the heat.

The insulating body 11 can collect firstly the molten core 35 discharged from the lateral side of the reactor pressure vessel 30. The lower part of the reactor pressure vessel 30 can be damaged by accumulation of the molten core normally collected at the lower part due to the gravity. However, it cannot be assumed the damaged part 31 is always located at the lower part. Accordingly, it is desirable to install the insulating body 11 encircling the lateral side of the reactor pressure vessel 30, in case of breakage of the lateral part of the reactor pressure vessel 30.

The insulating body 11 can be designed as the lower part is tapered. The tapered insulating body 11 can guide the molten core 35 so that the molten core firstly collected can be reserved in a core catcher 50 installed at the lower part of the reactor pressure vessel 30. In the lower part of the insulating body 11, its horizontal cross-section area or diameter (in case of a circle) is reduced downwardly.

The tapered insulating body 11 can collect the molten core 35 secondly. The material for the insulating body 11 is preferably Zirconium oxide (ZrO₂) or Magnesium oxide (MgO), which has low reactivity with the molten core 35. The Zirconium oxide is a hard transition metal having ash gray color, and similar to Titanium. The Magnesium oxide is a light metal having white color.

The Zirconium oxide is made of Zirconium mainly, and is resistant to corrosion. The melting point and boiling point of the Zirconium oxide are very high such as 1855°C and 4371°C, respectively. Also, it maintains the solid state in room temperature, and is harden by adding impurities. The Zirconium oxide is resistant to corrosion and its neutrons may have a small cross-section area.

The Magnesium oxide is a light metal having white color, and its melting point and boiling point are the lowest of all alkaline earth metals such as 650°C and 1090°C, respectively. The Magnesium oxide is used as structural materials due to its hardness although it has low density. In particular, alloys with aluminum, zinc, manganese, and iron have high hardness and excellent corrosion resistance although those have low densities. Therefore, those can be used in various fields such as airplane, car, and so on, and those can be material for the insulating body 11.

The insulating body 11 is located between the reactor pressure vessel 30 and the concrete wall 70 so as to act as insulation. The insulating body 11 provided with metal cladding or heat resistant ceramics can reduce heat transfer to the outside of insulation. The insulating body 11 may reduce the extent of damage due to the molten core accident more than when the molten core 35 directly touches the inside wall of the concrete wall 70.

A soluble plug 13 may be installed at the opening lower end of the insulating body 11 to form the base in which the guided molten core 35 is temporarily reserved. The soluble plug 13 may be installed at the end of the insulating body 11 to seal the lower opening face of the insulating body 11.

The soluble plug 13 may be made of sacrificial material having a high reactivity with the molten core 35 in order to be eroded by overload of the guided molten core 35. The core 33 of the reactor pressure vessel 30 may have different melting temperatures depending on the type of fuel. The insulating body 11 having a low reactivity with the molten core uses materials having higher melting point than that of the molten core 35 for inducing the molten core 35 to the lower portion. However, the sacrificial material may consist of material with a lower melting point than that of the insulating body 11.

The placement of the molten core 35 can be in the form of 2-layer or 3-layer, depending on the composition of the molten metal and the molten oxide. The 2-layer form consists of the molten metal on the upper layer and the molten oxide on the lower layer. The 3-layer form can consist of a light metal on the upper, the molten oxide on the middle and a heavy metal on the lower layers.

The sacrificial material consists of composite composition of the compound. This is to allow the density of the molten oxide layer to be reduced, wherein the molten oxide layer is formed at the bottom of the molten metal layer to create a layer. Reducing the density of the molten oxide layer may lead to a layer inversion phenomenon in which the molten oxide layer is located at the top of the molten metal layer.

The sacrificial material causes a layer reversal of the molten core 35 that can reach the temperature of the melting point by making contact with metal layers having high thermal conductivity. Because of the high thermal conductivity of the molten metal layer in contact with the soluble plug 13, the molten core 35 can be eroded under overload rather than in contact with the molten oxide layer.

The soluble plug 13 has the function for storing the molten core 35, but for draining it. The melting temperature, area and load at a draining portion of the soluble plug 13 may be specifically designed. In this case, the installation range of the core catcher 50 can be adjusted. The core catcher 50 acts as the receiver of the molten core 35 that falls from the reactor pressure vessel 30 within the reactor cavity 71

The soluble plug 13 temporarily stores the molten core 35 led to lower, and then drains it to the core catcher. Accordingly, it can reduce the heat load by delaying the time that the molten core 35 reaches to the core catcher 50.

The nuclear reactor insulator 10 is manufactured as an integral part of the reactor pressure vessel 30, or is fixed to the reactor pressure vessel 30 after being manufactured separately. The nuclear reactor insulator 10 can additionally perform the cooling function while collecting and guided discharging the molten core 35. Therefore, the nuclear reactor insulator 10 can perform the functions including collecting, cooling, and then guided discharging by grafting a cooling device.

Although the present invention was explained in detail through a representative example, those with ordinary knowledge in the technical field related to the present invention will understand that for the above example it is possible to make a variety of modifications within the scope of this invention. The scope of rights for the present invention should therefore not be limited to the example carried out, and subsequent changes or modifications derived not only from the scope of patent claims, but also from the scope of patent claims and an equality concept

### <Description of the Reference Numerals in the Drawings>

10: nuclear reactor insulator, 11: insulating body.
13: soluble plug
30: reactor pressure vessel, 31: damaged part
33: core, 35: molten core
50: core catcher
70: concrete wall, 71: reactor cavity
90: containment building

## Claims

1. A nuclear reactor insulator comprising:
an insulating body which is positioned at a predetermined distance away from the lateral side of a reactor pressure vessel and encircles the lateral side of the reactor pressure vessel, and of which the lower part is tapered; and
said insulating body capable of guiding and discharging the molten core downward, wherein the molten core is discharged from the nuclear reactor pressure vessel.

2. A nuclear reactor insulator according to claim 1, wherein the insulating body is made of Zirconium oxide (ZrO₂) or Magnesium oxide (MgO), which has low reactivity with the molten core.

3. A nuclear reactor insulator according to claim 1, further comprising:
a soluble plug being installed at the opened bottom of the insulating body, and forming a base in which the guided and discharged molten core is stored temporarily.

4. A nuclear reactor insulator according to claim 3, wherein the soluble plug is composed of sacrificial materials which have high reactivity with the molten core for erosion by overload of the guided and discharged molten core.
